# EUROPEAN PATENT SPECIFICATION

(11) **EP 0 478 191 B1**
(45) Date of publication and mention of the grant of the patent: **21.06.1995**
(21) Application number: 91308397.8
(22) Date of filing: 13.09.1991
(51) Int. Cl.: C03C 27/10, C03C 27/04, H01J 9/26

(54) **A sealed cathode ray tube**
Ein versiegeltes Kathodenstrahlrohr
Un tube à rayons cathodiques scellé

(30) Priority: 22.09.1990 KR 1505190
(43) Date of publication of application: 01.04.1992
(73) Proprietor: SAMSUNG DISPLAY DEVICES CO., LTD., Hwaseong-gun, Kyungki-do (KR)
(72) Inventor: Hu-deuk, Kim, Dongrae-ku, Pusan (KR)
(74) Representative: Kyle, Diana

(56) References cited:
- GB-A- 846 570
- GB-A- 986 190
- US-A- 3 321 099

## Description

This invention relates generally to a cathode ray tube, and is particularly directed to a cathode ray tube sealed with a sealant consisting essentially of epoxy resin and polyamide resin.

A conventional cathode ray tube (CRT) consists of a panel, a funnel, and an electron gun, and is manufactured by bonding these parts together with sealants.

PbO-containing sealing glasses, and particularly PbO-B₂O₃-ZnO sealing glasses, are most commonly used commercially to seal the glass face plate to the glass funnel of a CRT. For example, U.S. Pat. No. 4,120,678 describes a sealing glass paste consisting essentially of a PbO-B₂O₃-ZnO sealing glass frit, containing an effective amount of Pb₃O₄ or BaO₂ to prevent the reduction of PbO to Pb metal during the sealing process, together with hydroxypropyl cellulose binder for the frit and a solvent for the binder.

An improved bonding method is described in U.S. Pat. Nos. 4,788,471 and 4,826,463. By applying thin base layers of priming agent to the two abutting glass surfaces and an intermediate layer of sealing glass frit to either of the layers of the priming agent, bond integrity is ensured and high stress concentration in the seal is avoided. The sealing glass frit and the priming agent may be comprised of a conventional glass cement paste.

The aforementioned sealing glass frit, however, has some drawbacks when it is used to seal the face plate to the funnel of a CRT. The time required for sealing is as long as 3 hours, thereby decreasing the productivity per hour. Also, the temperature for sealing must be maintained above 400°C, which brings about energy consumption problems.

Therefore, it is an object of the present invention to provide a CRT sealed with a sealant which has a good sealing power and impact resistance, and requires less time and low temperature for sealing.

This object can be accomplished by the cathode ray tube comprising a funnel, a panel mounted to the forward edge portion of the funnel, and an electron gun positioned within the neck portion of the funnel, wherein at least one of the connection between the funnel and the panel and between the neck end of the funnel and the stem of the electron gun, is sealed with a sealant consisting essentially of epoxy resin and polyamide resin. The ratio of epoxy resin to polyamide resin used in the present invention is preferably in the range of about 60:40 to about 80:20 based on the weight of the total sealant, and more preferably in the range of about 60:40 to about 70:30.

The above object and other advantages of the present invention will become more apparent by the following detailed description of the invention with reference to the attached drawing in which:

Figure 1 is a graph showing the shearing strength of the sealant according to the change of temperature.

Figure 2 is a graph showing the shearing strength and bending strength of the sealant according to the mixing ratio of epoxy resin and polyamide resin.

Epoxy resin, used in the present invention, is manufactured by condensation of epichlorohydrin and bisphenol A. It has a wide variety of application because of its adhesive power, resistance to moisture and chemicals, and mechanical and electrical properties.

Polyamide resin, used in the present invention, is nylon 12 manufactured by polymerization of lauric lactam. It has a thermoplasticity, and a good resistance to chemicals, heat and abrasion.

A method for manufacturing the CRT according to the present invention will be described in detail below.

Epoxy resin and polyamide resin are mixed conventionally, and the ratio of mixing is preferably in the range of 60:40 to 80:20 based on the weight of the total sealant. The sealant composition thus obtained is then applied to the sealing areas of the panel and the funnel, or the neck end of the funnel and the stem of the electron gun of a CRT. The time required for sealing is about 8 to 12 hours at the temperature of 20°C, and about 30 to 60 minutes at the temperature of 80°C to 100°C.

The present invention will be described in detail by way of the following examples.

The following examples are merely representative and illustrative of the present invention but are in no way to be considered as limiting the invention to the specific examples.

### Example 1 a

Epoxy resin and polyamide resin were mixed at a ratio of 70:30 by weight under constant stirring. The sealant thus obtained was applied to the sealing areas of the panel and the funnel of a CRT. After mating the panel with the funnel, the tube was placed at a temperature of 100°C for 60 minutes, and then allowed to cool.

### Example 1 b

The procedure was carried out in the same manner as that of example 1a, except that the ratio of epoxy resin and polyamide resin was 50:50 by weight.

### Example 2-4

The procedures were carried out in the same manner as that of example 1, except that the ratios of epoxy resin and polyamide resin were 80:20, 60:40, and 40:60 by weight respectively.

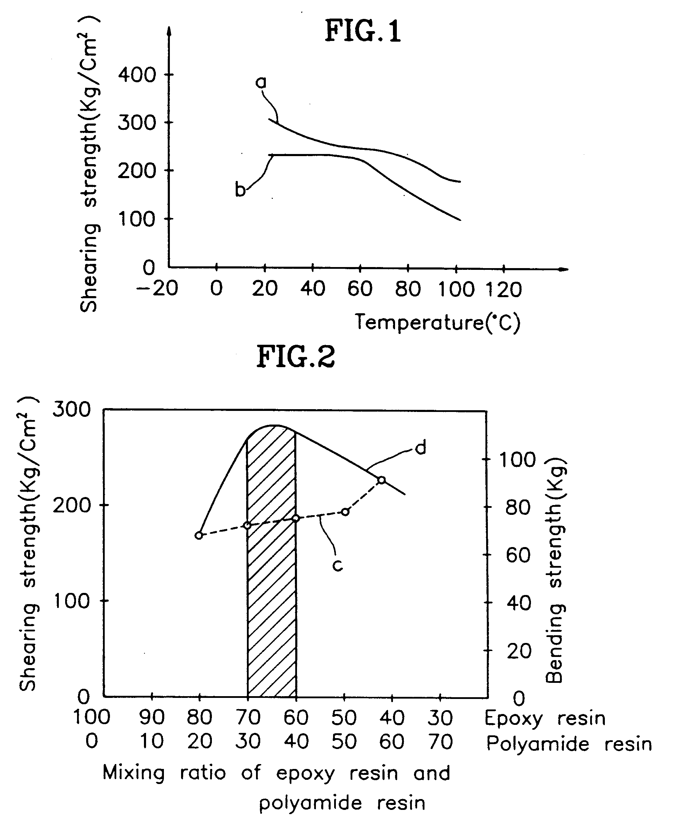

FIG. 1 is a graph showing the shearing strength of the sealant according to the change of temperature, wherein a is for the ratio of 70:30, and b is for the ratio of 50:50.

As can be seen from FIG. 1, at 20°C, the shearing strength is 320kg/cm² for a and 220kg/cm² for b; at 60°C, the shearing strength is 250kg/cm² for a and 220kg/cm² for b; and at 100°C, the shearing strength is 150kg/cm² for a and 70kg/cm² for b. According to increasing temperature, the shearing strength decreases. But the shearing strength of a is higher than that of b by 30 to 100kg/cm².

FIG. 2 is a graph showing the shearing strength and bending strength of the sealant according to the mixing ratio of epoxy resin and polyamide resin, wherein c is for the bending strength and d is for the shearing strength.

As can be seen from FIG. 2, the sealant of the ratio 70:30 to 60:40 has a good shearing strength of 270 to 280kg/cm², and a good bending strength of 70 to 75kg.

As described above, according to the method which seals the panel and the funnel, or the neck end of the funnel and the stem of the electron gun of a CRT with a sealant consisting essentially of epoxy resin and polyamide resin, the time required for sealing decreases by 2 hours, and the temperature for sealing also decreases by 300°C.

Furthermore the aforesaid sealant, with the ratio of epoxy resin to polyamide resin being in the range of about 60:40 to about 80:20 based on the weight of the total sealant, has a good shearing strength and bending strength.

## Claims

1. A cathode ray tube comprising:
a funnel;
a panel mounted to the forward edge portion of said funnel; and
an electron gun positioned within the neck portion of said funnel,
wherein at least one of the connections between said funnel and said panel and between the neck end of said funnel and the stem of said electron gun, is sealed with a sealant consisting essentially of epoxy resin and polyamide resin.

2. The cathode ray tube as claimed in claim 1, wherein the ratio of said epoxy resin to said polyamide resin is in the range of about 60:40 to about 80:20 based on the weight of the total sealant.

3. The cathode ray tube as claimed in claim 2, wherein the ratio of said epoxy resin to said polyamide resin is in the range of about 60:40 to about 70:30 based on the weight of the total sealant.

4. The cathode ray tube as claimed in claim 1, wherein said epoxy resin is manufactured by condensation of epichlorohydrin and bisphenol A.

5. The cathode ray tube as claimed in claim 1, wherein said polyamide resin is nylon 12 manufactured by polymerization of lauric lactam

6. The cathode ray tube as claimed in claim 4, wherein said polyamide resin is nylon 12 manufactured by polymerization of lauric lactam

## Patentansprüche

1. Kathodenstrahlröhre umfassend:
einen Trichter;
eine auf den vorderen Kantenbereich des Trichters angebrachte Platte; und
eine im Halsbereich des Trichters angeordnete Elektronenkanone,
worin mindestens eine der Verbindungen zwischen dem Trichter und der Platte und zwischen dem Halsende des Trichters und dem Rohr der Elektronenkanone mit einem Dichtungsmittel abgedichtet ist, das im wesentlichen aus Epoxidharz und Polyamidharz besteht.

2. Kathodenstrahlröhre nach Anspruch 1, worin das Verhältnis von Epoxidharz zu Polyamidharz im Bereich von ungefähr 60 : 40 bis ungefähr 80 : 20, bezogen auf das Gewicht des gesamten Dichtungsmittels, liegt.

3. Kathodenstrahlröhre nach Anspruch 2, worin das Verhältnis von Epoxidharz zu Polyamidharz im Bereich von ungefähr 60 : 40 bis ungefähr 70 : 30, bezogen auf das Gewicht des gesamten Dichtungsmittels, liegt.

4. Kathodenstrahlröhre nach Anspruch 1, worin das Epoxidharz durch Kondensation von Epichlorhydrin und Bisphenol A hergestellt ist.

5. Kathodenstrahlröhre nach Anspruch 1, worin das Polyamidharz Nylon 12 ist, hergestellt durch Polymerisation von Laurinlactam.

6. Kathodenstrahlröhre nach Anspruch 4, worin das Polyamidharz Nylon 12 ist, hergestellt durch Polymerisation von Laurinlactam.

## Revendications

1. Tube à rayons cathodiques comprenant :
un pavillon évasé,
un panneau ou écran monté sur la partie formant bord avant du pavillon et
un canon à électrons logé dans la partie rétrécie ou col du pavillon,
où au moins l'une des connexions entre le pavillon et l'écran et entre l'extrémité du col du pavillon et la tige du canon à électrons est hermétiquement fermée avec un matériau d'étanchéité essentiellement constitué d'une résine époxy et d'une résine de polyamide.

2. Tube à rayons cathodiques suivant la revendication 1, caractérisé en ce que le rapport de la résine époxy à la résine de polyamide varie d'environ 60:40 à environ 80:20 sur base du poids du matériau d'étanchéité total.

3. Tube à rayons cathodiques suivant la revendication 2, caractérisé en ce que le rapport de la résine époxy à la résine de polyamide varie d'environ 60:40 à environ 70:30 sur base du poids du matériau d'étanchéité total.

4. Tube à rayons cathodiques suivant la revendication 1, caractérisé en ce que la résine époxy est fabriquée par condensation de l'épichlorhydrine et du bisphénol A.

5. Tube à rayons cathodiques suivant la revendication 1, caractérisé en ce que la résine de polyamide est constituée de Nylon 12 fabriqué par polymérisation du laurinolactame.

6. Tube à rayons cathodiques suivant la revendication 4, caractérisé en ce que la résine de polyamide est constituée de Nylon 12 fabriqué par polymérisation du laurinolactame.
